# EUROPÄISCHE PATENTSCHRIFT

(11) **EP 3 113 930 B1**
(45) Veröffentlichungstag und Bekanntmachung des Hinweises auf die Patenterteilung: **08.05.2019**
(21) Anmeldenummer: 15710711.1
(22) Anmeldetag: 03.03.2015
(51) Int. Cl.: B29C 65/16, A44B 18/00, B29C 65/48, B29C 65/72, B29L 9/00

(54) **VERBINDUNGSVERFAHREN NEBST HIERFÜR EINSETZBAREM FUNKTIONSTEIL UND DANACH HERGESTELLTES SCHWERENTFLAMMBARES GESAMTSYSTEM**
CONNECTION METHOD IN ADDITION TO A FUNCTIONAL PART WHICH CAN BE USED THEREFOR, AND FLAME-RETARDANT GLOBAL SYSTEM PRODUCED THEREBY
PROCÉDÉ DE LIAISON, PIÈCE FONCTIONNELLE POUVANT ÊTRE UTILISÉE POUR CE PROCÉDÉ, ET SYSTÈME GLOBAL DIFFICILEMENT INFLAMMABLE FABRIQUÉ SELON CE PROCÉDÉ

(30) Priorität: 07.03.2014 DE 102014003211
(43) Veröffentlichungstag der Anmeldung: 11.01.2017
(73) Patentinhaber: Gottlieb Binder Gmbh & Co. Kg, 71084 Holzgerlingen (DE)
(72) Erfinder: POULAKIS, Konstantinos, 71157 Hildrizhausen (DE)
(74) Vertreter: Bartels und Partner, Patentanwälte
(86) Internationale Anmeldenummer: PCT/EP2015/000480
(87) Internationale Veröffentlichungsnummer: WO 2015/131998

(56) Entgegenhaltungen:
- WO-A1-97/36566
- GB-A- 1 400 080
- US-A1- 2005 094 937

## Beschreibung

Die Erfindung betrifft ein Verfahren zum Verbinden eines ein- oder mehrlagigen Funktionsteils mit einem Drittbauteil, wobei das Funktionsteil auf zumindest einer Seite vorstehende Funktionselemente aufweist, wobei eine Trägereinrichtung mit Verschluss- oder Adhäsionsteilen als Funktionselemente als eine Lage des Funktionsteils ausgebildet wird. Die Erfindung betrifft des Weiteren ein Funktionsteil, insbesondere vorgesehen für einen Einsatz bei einem dahingehenden Verbindungsverfahren sowie ein schwerentflammbares Gesamtsystem unter Einsatz des Verbindungsverfahrens und unter Einsatz des genannten Funktionsteils.

WO 97/36566 A1 betrifft bereits einen absorbierenden Einwegartikel mit einem wiederholt festlegbaren Befestigungsystem, mit dem der absorbierende Artikel an einem Träger in einer herkömmlichen Konfiguration oder in einer Anziehkonfiguration angelegt werden kann, einer längsverlaufenden Mittellinie und einer querverlaufenden Mittellinie, wobei der absorbierende Artikel aufweist:
a) eine Aufnahmeeinheit mit einer hinteren Taillienregion, einer Schrittregion, einer vorderen Taillienregion, einem Paar Längsrändern, einer körperseitigen Oberfläche und einer wäscheseitigen Oberfläche, die der körperseitigen Oberfläche entgegengesetzt ist, wobei die Aufnahmeeinheit eine Oberschicht, eine mit der Oberschicht verbundene Unterschicht und einen zwischen der Oberschicht und der Unterschicht positionierten absorbierenden Kern umfaßt;
b) ein elastomeres erstes Flügelfeld, das sich von einem der Längsränder der Aufnahmeeinheit in der hinteren Taillienregion seitlich nach außen erstreckt, wobei das erste Flügelfeld aufweist einen proximalen Rand, der mit der Aufnahmeeinheit verbunden ist, einen distalen Rand, der von dem proximalen Rand seitlich nach außen in Abstand liegt, eine innere Oberfläche und eine äußere Oberfläche;
c) ein elastomeres zweites Flügelfeld, das sich von dem anderen der Längsränder der Aufnahmeeinheit in der hinteren Taillienregion seitlich nach außen erstreckt, wobei das zweite Flügelfeld aufweist einen proximalen Rand, der mit der Aufnahmeeinheit verbunden ist, einen distalen Rand, der von dem proximalen Rand seitlich nach außen in Abstand liegt, eine innere Oberfläche und eine äußere Oberfläche; und
d) ein wiederholt festlegbares mechanisches Befestigungssystem mit:
   i) einem ersten Schließelement, das angrenzend an den distalen Rand des ersten Flügelfeldes angeordnet ist;
   ii) einem zweiten Schließelement, das angrenzend an den distalen Rand des zweiten Flügelfeldes angeordnet ist;
      wobei das erste Schließelement und das zweite Schließelement jeweils ein paar gegenüberliegende, längsverlaufende Außenränder, ein paar gegenüberliegende, querverlaufender Außenränder, eine äußere Region mit dem längsverlaufenden und dem querverlaufenden Außenrand und eine zentrale Region, die von der äußeren Region umgeben wird, aufweisen, wobei die zentrale Region eine Fläche hat, wobei das erste Schließelement mit dem ersten und das zweite Schließelement mit dem zweiten Flügelfeld verbunden ist;
   iii) einem dritten Schließelement, das in der vorderen Taillienregion (46) auf derwäscheseitigen Oberfläche der Aufnahmeeinheit angeordnet ist, wobei das dritte Schließelement mit dem ersten Schließelement und dem zweiten Schließelement in Eingriff gebracht werden kann, um so einen Taillienring zu definieren;
      wobei bei dem absorbierenden Artikel vorgesehen ist, daß das erste und das zweite Schließelement mit den Flügelfeldern mit mechanischen Bindungen verbunden sind, die in einem Muster angeordnet sind, in welchem wenigstens eine mechanische Randbindung in der äußeren Region neben jedem der längsverlaufenden Außenränder angeordnet ist, wobei der Taillienring vorzugsweise einen Umfang im entspannten Zustand zwischen etwa 280 mm und etwa 360 mm und einen voll gestreckten Umfang zwischen etwa 550 mm und etwa 600 mm hat, wenn eine Kraft von weniger als etwa 2000 g aufgebracht wird.

GB 1 400 080 A offenbart einen Decken- oder vließförmig bzw. bandförmig o. ä. ausgebildeten Gegenstand zur Herbeiführung einer lösbaren Befestigung. Der Gegenstand zeichnet sich aus durch Verhakungselemente geringer Höhe und durch eine gegebenenfalls direkt unterhalb der Verhakungselemente angeordnete kompressible Schicht, die ein Polster bildet und mindestens stellenweise mit den Verhakungselementen bzw. deren Träger verbunden ist, wobei die Anordnung derart getroffen ist, daß beim Zusammenwirken des Gegenstandes mit einem zweiten, komplementäre starre Verhakungselemente von vorzugsweise ebenfalls geringer Höhe tragenden Gegenstand die letzteren das Polster stellenweise und vorübergehend zusammendrücken, um tief in oder zwischen die Verhakungselemente des ersten Gegenstandes einzudringen und sich mit diesen zu verhaken, wohingegen ohne eine Zusammendrückung die Verhakung aufgrund der geringen Höhe der Verhakungselemente schwierig und unwirksam wäre.

Ferner ist durch die EP-B-0 883 354 ein flammhemmendes Funktionsteil, insbesondere Verschlussteil bekannt, das für einen wiederlösbaren Eingriff an ein zweites Verschlussteil angepasst ist, welches aufweist:
- eine bandförmige Trägereinrichtung aus einem flammhemmenden Polymermaterial mit einer freiliegenden Verbindungsfläche und einer Auflagefläche;
- mehrere flexible, elastische Stielabschnitte als Funktionselemente, welche sich im Allgemeinen senkrecht zu der Verbindungsfläche erstrecken, wobei die distalen Stielabschnitte einen vergrößerten Kopfabschnitt aufweisen, der an einem distalen Ende des Stielabschnittes angeordnet ist, wobei der vergrößerte Kopfabschnitt eine Oberseite dem distalen Stielabschnitt gegenüberliegend aufweist, und eine der Verbindungsfläche gegenüberliegende Verbindungsfläche, und die Kopfabschnitte sind derart angeordnet, dass sie eine Bewegung entlang unterschiedlicher Abschnitte der Trägerschicht und einen lösbaren Eingriff mit dem zweiten Befestigungselement ermöglichen; und
- einen nicht-flammhemmenden, druckempfindlichen Kleber, der auf die Auflagefläche aufgebracht ist.

Das bekannte Befestigungselement erfüllt hierdurch die Anforderungen des F.A.R. 25.853(a)(1)(i) Vertikal-Entflammbarkeitstest ohne Befestigung an einem Substrat. Die dahingehende Bestimmung oder Spezifikation bezieht sich auf solche Befestigungssysteme, die insbesondere Anwendungen in der Fahr- und Flugzeugtechnik betreffen und die beispielsweise dem Befestigen von Wandpaneelen an der Trägerstruktur einer Kabine eines Schienenfahrzeuges oder dem Festlegen von Sitzbezugmaterialien sowie Polstermaterialien an Fluggastsitzen und dergleichen mehr dienen. Insbesondere im Bereich der Luftfahrzeugtechnik werden an dahingehende Befestigungssysteme heute erhöhte Anforderungen an die Schwerentflammbarkeit gestellt, die deutlich höher liegen können als die Angaben in der vorstehend genannten Spezifikation.

Bei der vorstehend beschriebenen bekannten Lösung ist darüber hinaus bei einer bevorzugten Ausführungsform der nicht-flammhemmende Kleber eine Schaumschicht aus einem druckempfindlichen Acryl-Schaumkleber, wobei dahingehend aufgebaute Kleber beispielhaft in der WO-A-2005/017060 näher beschrieben sind.

Obwohl sich sowohl die druckempfindlichen Kleber als auch die angesprochenen Acryl-Schaumkleber in der Praxis zum Festlegen von Funktionsteilen, wie Kletten®-Haftverschlüsse, ebenso bestens bewährt haben wie für insbesondere bandartig ausgestaltete Gecko®-Adhäsionsanhaftsyteme auf der Basis von Van-der-Waals-Kräften, an Drittbauteilen, ist nicht völlig auszuschließen, dass die Klebstoffverbindung nachgibt oder versagt und insoweit das Funktionsteil sich ungewollt von dem Drittbauteil, beispielsweise in Form von Boden- oder Wandteilen einer Flug- oder Fahrzeugkabine oder einem Sitzteil eines Flug- oder Fahrzeuggastsitzes, ablösen kann. Insbesondere in öffentlich zugänglichen Räumen oder für dahingehend zugängliche Bauteile, wie Sitze jedweder Art, kann es insbesondere im Bereich sich bewegender Flug- oder Fahrzeuge zu einer Gefährdung von Bedien-, Montage- oder Nutzerpersonen kommen, wenn sich durch Versagen der Klebstoffverbindung ungewollt, insbesondere größere Baukomponenten, wie Boden- und Wandabdeckungen, die durch das Funktionsteil mit dem Drittbauteil verbunden sind, von diesem ablösen sollten. Ferner steigen zusehends die Herstellkosten für die angesprochenen üblichen Kleber an, so dass eine Notwendigkeit besteht, sich nach verbesserten Verbindungstechniken umzusehen.

Ausgehend von dieser Problematik liegt der Erfindung die Aufgabe zugrunde, gegenüber dem Stand der Technik, der Funktionsteile mit Trägereinrichtungen mit Verschluss- oder Adhäsionsteilen betrifft, verbesserte Lösungen zu schaffen, die in kostengünstiger und funktionssicherer Weise zusätzlich oder alternativ zu den bekannten Klebeverbindungstechniken eine verbesserte Verbindung zwischen den genannten Teilen ermöglichen.

Eine dahingehende Aufgabe löst ein Verfahren mit den Merkmalen des Patentanspruches 1 in seiner Gesamtheit und ein Funktionsteil gemäß der Merkmalsausgestaltung des Anspruches 6 sowie ein schwerentflammbares Gesamtsystem gemäß der Merkmalsausgestaltung des abhängigen Anspruches 9.

Dadurch dass gemäß dem kennzeichnenden Teil des Patentanspruches 1 das Funktionsteil zumindest teilweise aus einem zumindest teilweise laserlichtdurchlässigen Material gebildet wird, und dass eine zumindest teilweise laserundurchlässige Sperrlage derart angeordnet wird, dass nach Durchtritt des Laserlichts durch das Funktionsteil das Laserlicht innerhalb der Sperrlage durch Absorption Wärme erzeugt, die geeignet ist, das Funktions- und/oder das Drittbauteil anzuschmelzen, um dergestalt diese miteinander zu verbinden, ist in besonders rationeller Weise mittels eines Laser-Durchstrahlschweißens die Verbindung zwischen Funktionsteil und Drittbauteil erreicht. Insbesondere durch das Ausbilden der laserundurchlässigen Sperrschicht zwischen dem Drittbauteil und der zugeordneten festzulegenden Seite des Funktionsteils ist die Energieabsorption im unmittelbaren Schweißbereich der beiden Teile miteinander sichergestellt und der durch das Laserlicht erhitzte und aufschmelzende Materialbereich, der sowohl auf Seiten des Funktionsteiles als auch auf Seiten des Drittbauteils anzusiedeln ist, bildet das Fügeelement zum Verschmelzen der insoweit angrenzenden Fügepartner miteinander und stellt eine sichere Verbindung her, die auch unter Belastung oder Beanspruchung, wie Temperatureintrag, Vibrationen, schlag- oder stoßartige Beanspruchung etc., sicher hält.

Bei einer besonders bevorzugten Ausführungsform des erfindungsgemäßen Verbindungsverfahrens wird das Funktionsteil auf seiner dem Laserlichteintritt abgewandten Seite mit der Sperrlage versehen und/oder die Sperrlage ist aus dem Drittbauteil selbst gebildet oder Teilen dieses Bauteils und/oder aus einem eigenständigen Bauteil.

Im einfachsten Fall ist das Funktionsteil aus einem vorzugsweise durchsichtigen, insbesondere laserlichtdurchlässigen Haftverschlussteil oder Adhäsionshaftteil gebildet und das Funktionsteil weist auf seiner der Funktionselementseite abgewandten Unterseite eine geeignete laserlichtabsorbierende Sperrlage auf. Soweit die angesprochenen Funktionsteile durch ein sogenanntes Chill-Cast-Formgebungsverfahren (DE 10 2004 012 067 A1) hergestellt werden, kann während des Formgebungsprozesses auf der Trägerbandseite, auf der die Funktionselemente, wie pilzförmige Verschlussköpfe, Verschlusshaken, Adhäsionselemente, Schlaufenmaterial etc., vorstehen, die angesprochene Sperrschicht intrinsisch integriert sein, beispielsweise indem man nanopartikuläre Fluide, die auch über entsprechende Graphitanteile verfügen können, mit dem sonstigen Kunststoffmaterial der bandförmigen Trägereinrichtung verbindet.

Eine weitere Möglichkeit besteht darin, auf der Rückseite des Trägerbandes, die den Funktionselementen abgewandt ist, eine zusätzliche Sperrfolie, beispielsweise in Form einer Schwarzkörperfolie, aufzubringen, was auch durch ein Aufrakel- oder Beschichtungsverfahren erfolgen kann, so dass gleichfalls ein fester Verbund zwischen der Schwarzfolie und dem Funktionsteil erreicht ist. Letztere Ausgestaltung ist insbesondere dann sinnvoll, wenn ein als Haftverschlussteil konzipiertes Funktionsteil ein Grundgewebe aus Kett- und Schussfäden aufweist, in dem über Polfäden die Verschlusselemente als Funktionselemente zusätzlich in vorstehender Weise eingewoben sind. Die dahingehenden Funktionselemente können in Form von Verhakungselementen ausgebildet sein, die regelmäßig aus einzelnen vorstehenden Stielteilen gebildet sind, die an ihrem jeweils freien Ende in ein verbreitertes Kopfteil ausmünden, und/oder aus Verschlussschlaufen gebildet sind.

Bei einem besonders bevorzugten Verfahren ist vorgesehen, dass das Funktionsteil mehrlagig ausgebildet ist und dass die Trägereinrichtung mit den Verschluss- oder Adhäsionsteilen als Funktionselemente als eine Lage des Funktionsteils ausgebildet wird, die von einer weiteren Lage des Funktionsteils seitlich mit einem vorgebbaren Überstand zumindest teilweise überragt wird, die zumindest teilweise aus einem laserdurchlässigen Material gebildet wird, nach deren Passieren das Laserlicht auf die Sperrlage trifft oder zu dieser geleitet wird. Im dahingehenden Fall kann die Laserverbindung ausschließlich über die weitere Lage des Funktionsteils erfolgen und die Lage des Funktionsteiles mit der Trägereinrichtung und den Verschluss- oder Adhäsionsteilen kann auch laserlichtundurchlässig gehalten sein, so dass auch eingefärbte Verschluss- und Adhäsionsteile Verwendung finden können. Sofern die Trägereinrichtung über Stiel- und Kopfteile als Funktionselemente verfügt, besteht auch die Möglichkeit, Licht über die jeweiligen Kopf- und Stielteile in Richtung der Sperrlage zu leiten, so dass in der Art eines Lichtleiters das Laserlicht durch die Stielteile geführt werden kann.

Besonders bevorzugt ist bei einem erfindungsgemäßen Verfahren vorgesehen, dass neben der Laserverbindung als zusätzliche Sicherung gegen ein ungewolltes Lösen zwischen Funktionsteil und dem Drittbauteil eine zweite Verbindungstechnik zum Einsatz kommt. So kann eventuell bei starker mechanischer Beanspruchung die ausgehärtete Klebstoffverbindung nachgeben; der Verbund zwischen Funktions- und Drittbauteil ist dann aber immer noch über die Laserverbindung und die insoweit miteinander verschmolzenen Fügebereiche sichergestellt. Treten hingegen sehr hohe Temperaturen auf, kann die Laserverbindung nachgeben, insbesondere wenn der Bereich der Fügepartner aus Kunststoffmaterialien gebildet wegschmelzen sollte mit der Folge, dass die Verbindung dann immer noch über den Klebstoffeintrag sichergestellt ist. Das dahingehend redundante System, das Mehrfachbeanspruchungen abdeckt, wird somit auch höchsten Anforderungen in der Luftfahrttechnik gerecht und erfüllt hier die neuesten Anforderungsspezifikationen.

Es ist für einen Durchschnittsfachmann überraschend, dass er durch die Kombination zweier komplett unterschiedlicher Verbindungstechniken (Lasern und Kleben) zu derart verbesserten Resultaten kommt; dies hat so keine Entsprechung im Stand der Technik.

Im Folgenden wird die erfindungsgemäße Lösung anhand verschiedener Ausführungsbeispiele nach der Zeichnung näher erläutert. Dabei zeigen in prinzipieller und nicht maßstäblicher Darstellung die
- Fig. 1: eine Seitendarstellung auf einen Ausschnitt eines nach einem Mikro-Replikationsverfahren hergestellten Adhäsions-Anhaftteils mit unterseitig angebrachter Schwarzkörperfolie;
- Fig. 2: eine der Fig. 1 entsprechende Darstellung eines vorzugsweise nach einem Chill-Cast-Verfahren hergestellten Haftverschlussteils mit auf einem Trägerband vorstehenden Stiel- und Kopfteilen als Verhakungselemente mit intrinsisch eingelagerten nano-partikulären Schwarzkörpern;
- Fig. 3: das Gewebebild eines Haftverschlussteils als weitere dritte Ausführungsform in Draufsicht;
- Fig. 4: eine Seitendarstellung auf das flächige Haftverschlussteil nach der Fig. 3 mit unterseitig angeordneter Schwarzkörperfolie;
- Fig. 5: in der Art einer perspektivischen Draufsicht in gewölbter Form ein mehrlagiges Funktionsteil als Teil eines schwerentflammbaren Gesamtsystems.

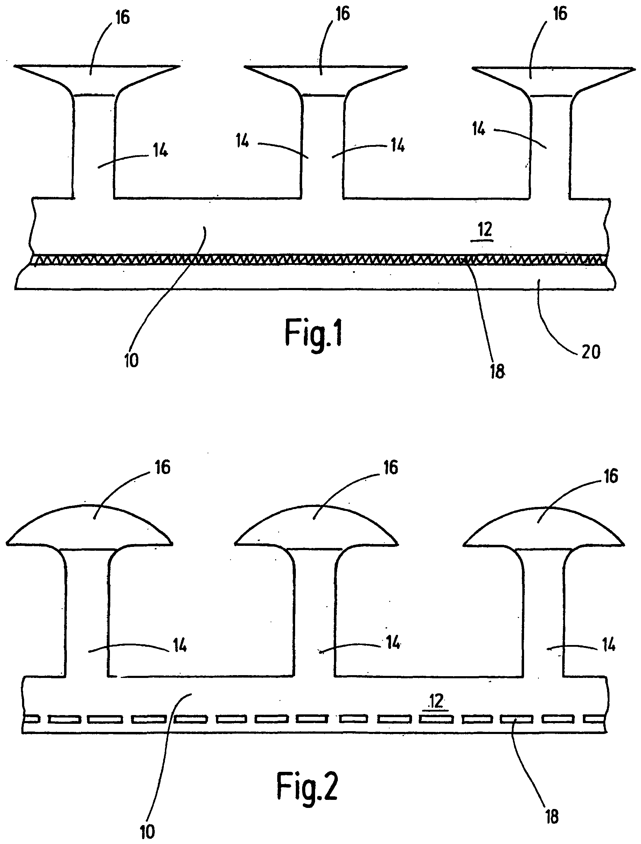

Die Fig. 1 zeigt ausschnittweise ein Funktionsteil 10 mit einer Trägereinrichtung 12 in Form eines Trägerbandes mit vorgebbaren Längen-, Quer- und Höhenabmessungen. Auf der Trägereinrichtung 12 sind vertikal vorstehende Stielteile 14 angeordnet, die in Richtung ihrer oberen freien Endseite sich verbreitern und jeweils Kopfteile 16 ausbilden, die mit den zuordenbaren Stielteilen 14 einstückig verbunden sind. Die dahingehenden Stielteile 14 nebst den Kopfteilen 16 bilden die einzelnen Funktionselemente des Funktionsteils 10 aus.

Das dahingehende Funktionsteil 10 ist durch ein sog. Mikro-Replikationsverfahren herstellbar, wie es beispielhaft in der DE 10 2004 012 067 A1 aufgezeigt ist. Das in Fig. 1 gezeigte Funktionsteil bildet ein Adhäsionsanhaftteil aus, wobei die erzeugte Funktionselemente-Struktur derart klein bemessen ist, dass sich mehr als 16.000 Funktionselemente pro cm² auf der bandartigen Trägereinrichtung 12 erstrecken können. Insbesondere erstrecken sich die Funktionselemente nicht nur in der Zeichenebene in Längsrichtung des Bandes aus, sondern auch nach vorgebbaren Mustern (nicht dargestellt) quer zur Bandrichtung. Die Anhaftung der freien Seiten der Kopfteile 16 an festzulegenden Strukturen, wie beispielsweise Glaskörper, Kunststoffplatten, aber auch vorzugsweise beschichteten Textilmaterialien etc. erfolgt über sog. Van-der-Waals-Kräfte, wobei sich aufgrund der Vielzahl an Funktionselementen sehr hohe Anhaftkräfte erreichen lassen. Zum Lösen der festzulegenden Strukturen von dem Adhäsionsanhaftteil in Form des Funktionsteils 10 nach der Fig. 1 ist es am besten, deren jeweilige Oberfläche vorzugsweise von der Oberfläche der Kopfteile 16 in einem Winkel von 90° oder mehr abzuschälen, um dergestalt die Verhaftung über die Van-der-Waals-Kräfte zu lösen. Die vorstehend beschriebenen Anbringungs- und Lösevorgänge können in Abhängigkeit der Ausgestaltung des Verschlusssystems mehrfach, vorzugsweise mehrere Tausend Mal erfolgen.

Um das Funktionsteil 10 gemäß der Darstellung nach der Fig. 1 im Rahmen des vorstehend bezeichneten Mikro-Replikationsverfahrens herstellen zu können, kommen für das Funktionsteil 10 besonders anorganische und organische Elastomere zum Einsatz. Als besonders vorteilhaft haben sich als Eintragmaterial Polyvinylsiloxane erwiesen sowie adhäsionsvernetzte Silikon-Elastomere auch in der Form von 2-Komponenten-Systemen sowie Acrylate. Die vorstehend bezeichneten Kunststoffmaterialien lassen sich zumindest teilweise durchsichtig, insbesondere laserdurchlässig gestalten mit dem Vorteil, dass das Laserlicht mehr oder minder ungehindert das in Fig. 1 gezeigte Funktionsteil 10 von oben nach unten durchdringen kann. Wie sich des Weiteren aus der Fig. 1 ergibt, ist auf der Unterseite der bandartigen Trägereinrichtung 12 eine Sperrlage 18 vorhanden, die weitestgehend laserundurchlässig ist und insbesondere in der Art eines Schwarzkörpers ausgebildet ist. So kann die Sperrlage 18 nach der Fig. 1 aus einer sog. Schwarzkörperfolie bestehen. Vorzugsweise lässt sich die Folie 18 auf die Unterseite des Trägerbandes 12 aufrakeln, so dass Band 12 und Folie 18 eine feste Verbindung miteinander eingehen. Es besteht aber auch die Möglichkeit, mittels geeigneter Klebstoffe die Folie 18 auf die Unterseite des Bandes 12 aufzukleben. Das insoweit zweilagig ausgebildete Funktionsteil 10 lässt sich dann auf ein Drittbauteil 20 aufsetzen, das vorzugsweise gleichermaßen aus Kunststoffmaterialien besteht; was aber nicht zwingend erforderlich ist. Insbesondere kann das Drittbauteil 20 aus einem Rahmenteil eines Fahrzeug- oder Fluggastsitzes gebildet sein oder Bestandteil von Wandteilen einer Fahrzeug- oder Flugzeugkabine. Tritt das Laserlicht nun durch das Funktionsteil 10 hindurch, trifft es auf die Sperrlage 18, wobei innerhalb der Sperrlage 18 durch Absorption Wärme erzeugt wird, die geeignet ist, das Funktionsteil 10 und/oder das Drittbauteil 20 anzuschmelzen, um dergestalt diese fest miteinander zu verbinden.

Die Wellenlänge der Laserstrahlung ist an die jeweiligen Absorptionseigenschaften des thermoplastischen Materials der Schwarzkörperfolie 18 angepasst, wobei der Absorptionskoeffizient für die ausgewählte Wellenlänge vorzugsweise zwischen 5 % und 40 % beträgt. Vorzugsweise wird für die hier vorstehend beschriebenen Ausführungsbeispiele eine Laserstrahlung mit einer Wellenlänge bevorzugt in einem Wellenlängenbereich von 400 nm mit 2000 nm eingesetzt. Vorzugsweise weist die Laserstrahlung bzw. die einzelnen Laserstrahlen miteinander ein Gauß'sches Strahlenprofil auf. Durch eine geeignete Wahl der Laserstrahlung, ihre Aufteilung und Fokussierung in den Anlagebereichen der zu verbindenden vorstehend beschriebenen Teilkomponenten können diese in kostengünstiger und funktionssicherer Weise fest miteinander verbunden bzw. verschweißt werden. Für besondere Verbindungsanwendungen hat es sich als vorteilhaft erwiesen, einen gepulsten Laser einzusetzen. Bei geeigneter Auswahl des Lasers und der eingesetzten Materialien kann ein verbindender Aufschmelzbereich mit einem Durchmesser oder einer Breite von weniger als 1 mm, bevorzugt weniger als 0,5 mm, weiter besonders bevorzugt mit weniger als 0,1 mm, erzeugt werden, was eine große Rolle spielt, da im Hinblick auf die geringe Baugröße der eingesetzten, miteinander zu verbindenden Komponenten größere Verbindungsbereiche materialschädigend sein könnten und zum Unbrauchbarwerden des Festlegesystems führen würden. Als geeignete Laser für das Durchstrahlschweißverfahren mittels Laserlicht sind beispielsweise Festkörperlaser, wie Nd:YAG-Laser, mit einer Wellenlänge von 1064 nm sowie Hochleistungsdioden-Laser mit Wellenlängen im Bereich von 800 bis 1000 nm geeignet. Bei der angesprochenen Schwarzkörperfolie 18 kann es sich um eine Polyamidfolie mit eingebetteten sensitiven Partikeln handeln, insbesondere Farbpigmente, wie Ruß od.dgl., wobei diese Partikel eine entsprechende Mindesttemperaturstabilität aufweisen. Als Folienstärke können 0,03 bis 0,1 mm, vorzugsweis 0,05 mm, angesetzt werden.

Die angesprochene Sperrlage 18 kann auch ein eigenständiges Bauteil bilden, das dann zwischen Funktionsbauteil 10 und Drittbauteil 20 einzulegen ist. Nach Aneinanderhalt der Komponenten, was auch von Hand geschehen kann, findet dann der Verbindungsvorgang mittels Laserlicht statt. Selbstredend kann die Sperrlage 18 auch an dem Drittbauteil 20 angeordnet sein oder das Drittbauteil 20 selbst besteht auf seiner Außenumfangsseite aus einem geeigneten Sperrlagenmaterial, beispielsweise in Form aufgesprühten Rußes, um dergestalt beim Laservorgang die Absorptionsfähigkeit am Drittbauteil 20 sicherstellen zu können und mithin die sichere Verbindung von Funktionsbauteil 10 mit Drittbauteil 20.

Im Folgenden werden die weiteren Ausführungsbeispiele nur noch insofern erläutert, als sie sich wesentlich von der vorangehenden Ausführungsform unterscheiden.

Bei der Ausführungsform nach der Fig. 2 handelt es sich um ein sog. Haftverschlussteil, wie es sich beispielsweise durch ein Verfahren herstellen lässt, wie es durch die DE 10 2007 015 441 A1 aufgezeigt ist. Es lassen sich hier aber auch noch andere Formgebungsverfahren einsetzen, beispielsweise unter Einsatz von Formgebungswalzen, wobei der dahingehende Herstellvorgang fachsprachlich auch als "Chill-Cast"-Formgebungsverfahren bezeichnet wird. In Übereinstimmung mit dem Ausführungsbeispiel nach der Fig. 1 ist das Funktionsteil 10 wiederum aus einer bandartigen Trägereinrichtung 12 gebildet mit vorstehenden Stielteilen 14 und einstückig daran angeordneten endseitigen Kopfteilen 16. In Abkehr zu der Lösung nach der Fig. 1 ist jedoch das Haftverschlussteil nach der Fig. 2 um Größenordnungen größer ausgestaltet und soll insbesondere dazu dienen, in wieder lösbarer Weise mit einem weiteren Haftverschlussteil (nicht dargestellt) zusammenzuwirken, um dergestalt einen immer wieder öffen- und schließbaren Haftverschluss zu schaffen. So kann beispielsweise ein Schlaufenmaterial eines anderen Haftverschlussteils (nicht dargestellt) die vorstehenden Vorsprünge unter den pilzförmigen Kopfteilen 16 unterhaken, um dergestalt die Verbindung herzustellen. Ferner sind Verbindungslösungen bekannt, bei denen vergleichbar ausgebildete Kopfteile eines anderen Haftverschlussteils (nicht dargestellt) einen wieder lösbaren Verschluss, sprich Verbindung mit dem gezeigten Funktionsteil 10 nach Fig. 2 eingehen. Die dahingehenden Haftverschlussteile und Haftverschlussverbindungstechniken sind hinreichend bekannt, so dass an dieser Stelle hierauf nicht mehr näher eingegangen wird. Insbesondere eignen sich dahingehende Haftverschlussteile, um Polterbezugmaterialien, auch textiler Natur, an Polsterteilen festzulegen.

Als Sperrlage 18 für das vorliegende Ausführungsbeispiel nach der Fig. 2 sollen sog. Additive dienen, beispielsweise in Form sog. Karbon-Nanotubes (CNT) und/oder Karbonfasern, die in den Grundwerkstoff des Kunststoffs während des Formgebungsverfahrens eingesetzt werden können. Dahingehende Karbonmaterialien haben auch den Vorteil der elektrischen Leitfähigkeit, so dass etwaige statische Belastungen des Funktionsteils 10 über die Karbonmaterialien abgeleitet werden können. Die angesprochenen Additive, insbesondere in Form der Karbon-Nanotubs, liegen auch in liquider Form vor, so dass sich die dahingehende Flüssigkeit auf der freiliegenden Unterseite des Trägerbandes 12 während des Formgebungsprozesses einbringen lässt.

Eine andere Möglichkeit der Herstellung würde auch darin bestehen, dass man in einem ersten Formgebungsschritt zunächst die Formkavitäten des Formwerkzeuges mit laserdurchlässigem Material befüllt und dann zusehends das Kunststoffmaterial in Richtung der freien Unterseite des Trägerbandes 12 zur Bildung der Absorptionsschicht als Sperrlage 18 einfärbt.

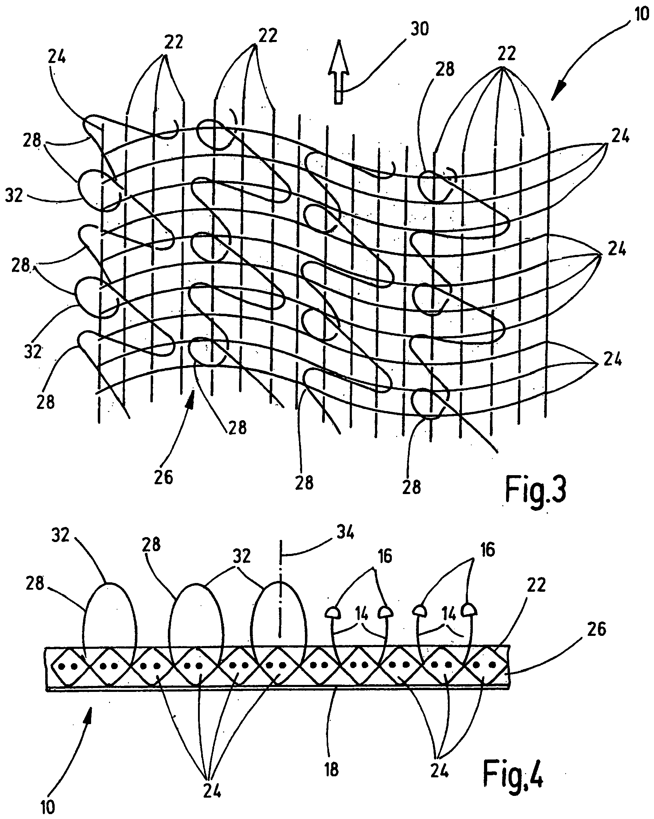

Die weitere dritte Ausführungsform nach den Fig. 3 und 4 zeigt von der Fig. 3 her eine ausschnittsweise Draufsicht auf ein flächenförmiges Haftverschlussteil, das sich innerhalb der Bildebene des Rohlings in der einen als auch in der anderen Bildrichtung beliebig verlängern lässt und die geometrischen Abmessungen des Flächengebildes als Funktionsteil 10 sind abhängig von den Vorgaben der Webeinrichtung, auf der das Verschlussteil gefertigt wird. Insbesondere können für die spätere Verwendung dahingehender Verschlussteile diese in der Art von rollenartig aufgewickelten Haftverschlussbändern konfektioniert (nicht dargestellt) werden. Das Verschlussteil als Funktionsteil 10 besteht aus Kettfäden 22 und Schussfäden 24, die in Queranordnung miteinander verwebt das Grundgewebe 26 für das Haftverschlussteil bilden. Des Weiteren ist das Grundgewebe 26 mit Funktionsfäden 28 als Funktionselemente des Funktionsteils 10 versehen, die einen weiteren Bestandteil des Grundgewebes 26 mit ausbilden. Der jeweilige Funktionsfaden 28 bildet dann für das bandförmige Haftverschlussteil die einzelnen Funktions- oder Verschlusselemente aus, was nachfolgend noch näher erläutert werden wird. Des Weiteren spricht man häufig fachsprachlich anstelle der eingesetzten Fäden auch von Garnen.

In Blickrichtung auf die Fig. 3 gesehen ist auf ihrer Oberseite mit einem Pfeil 30 die Produktionsrichtung für das herzustellende Verschlussteil wiedergegeben. Bei der gezeigten Anordnung nach der Fig. 3 sind die jeweiligen Schussfäden 24 in der Art einer Sinus- oder Kosinuswelle bogenförmig ausgebildet und an den Kreuzungsstellen zwischen Kettfäden 22 und Schussfäden 24 verlaufen die Kettfäden 22 parallel zur Produktionsrichtung 30 sowie parallel zueinander in geradliniger Anordnung. Bei der gezeigten Ausführungsform sind nur die Schussfäden 24 bogenförmig im Grundgewebe 26 verlaufend angeordnet, wobei der jeweilige Schussfaden 24 in alternierender Reihenfolge einen Kettfaden 22 übergreift und den in Reihe unmittelbar nachfolgenden untergreift. Der Vorteil einer dahingehenden bogenförmigen Ausgestaltung ist näher in der DE 10240986 B der Schutzrechtsinhaberin aufgezeigt, so dass an dieser Stelle hierauf nicht mehr näher eingegangen wird.

An der Stelle des jeweiligen Untergriffs des Grundgewebes 26 bildet der Funktions- oder Polfaden 28 eine darüberliegende Schlaufe 32 aus, wobei nachfolgend unmittelbar eine weitere Schlaufe 32 ausgebildet ist, so dass eine Art V-Bindung verwirklicht ist. Es sind hier aber auch andere Bindungsarten denkbar, beispielsweise dass Einbinden des jeweiligen Funktionsfadens 28 in W-förmiger Art od. dgl..

Die genannten Schlaufen 32 bilden eine Art von Verschlusselementen als Funktionselemente aus und bleiben die Schlaufen 32, wie in Fig. 2 dargestellt, geschlossen, entsteht dergestalt ein Flausch-Haftverschlussteil, wobei haken- oder pilzartige Verschlusselemente (s. Fig.2) in die dahingehenden Schlaufen 32 eingreifen können, um dergestalt wiederum einen wieder lösbaren Haftverschluss als Ganzes im Rahmen eines Verschluss- oder Befestigungssystems zu erhalten. Es besteht aber auch gemäß der Darstellung nach der Fig. 4, die eine Art Längsansicht zur Längsausrichtung des Pfeiles 30 auf das Funktionsteil 10 darstellt, die Möglichkeit, zumindest teilweise die einzelnen Schlaufen 32 entlang einer Trennlinie 34 aufzuschmelzen, so dass dergestalt nach dem Anschmelzen der freien Enden der geöffneten Schlaufe jeweils ein Verschlusselement mit Stielteil 14 und pilzförmigem Kopfteil 16 entsteht entsprechend der Darstellung nach der Fig. 2.

Da das in der Fig. 3 aufgezeigte Grundgewebe zwischen den einzelnen Fadensystemen 22, 24 und 28 über im Wesentlichen rechteckförmige Ausnehmungen verfügt, besteht die Möglichkeit, dass Laserlicht die dahingehenden Abstände durchdringen kann zwecks Auftreffen auf eine Sperrlage 18, die an der Unterseite des Funktionsteils 10 als weitere Lage angeordnet ist und wiederum beispielsweise in der Art einer Schwarzkörperfolie ausgestaltet sein kann. Dergestalt lassen sich insoweit dann auch gewebte, gewirkte und gestrickte Verschlussmaterialien an Drittkörperbauteilen mittels eines Lasers festlegen.

Bei der Fadenlösung nach den Fig. 3 und 4 kann auch auf eine eigenständige Sperrlage, beispielsweise in Form einer anzubringenden Schwarzkörperfolie 18, verzichtet werden, indem man eben einzelne Fäden des aus Kett- und Schussfäden 22, 24 bestehenden Grundgewebes 26 schwarz ausgestaltet, beispielsweise aus Karbon ausbildet, um dergestalt einen Werkstoff zu haben, mit hoher Absorptionsfähigkeit für das Laserlicht.

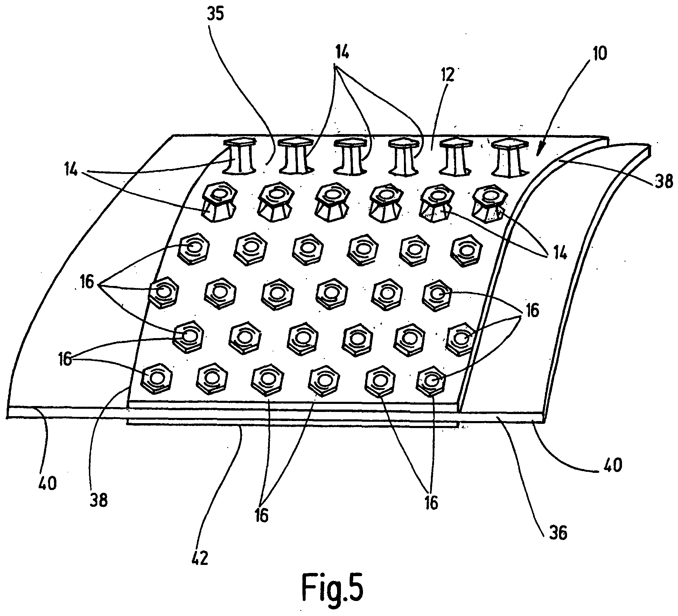

Bei der Ausführungsform nach der Fig. 5 ist als Funktionsteil 10 wiederum ein Haftverschlussteil im Einsatz mit einer bandförmigen Trägereinrichtung 12, auf der einzelne Stielteile 14 mit ihren endseitigen Kopfteilen 16 mit einem vorgebbaren Überstand vorstehen. Das dahingehende Haftverschlussteil als Funktionsteil 10 lässt sich wiederum mit einem Herstellverfahren erhalten, wie es für die Ausführungsform nach der Fig. 2 angegeben ist. Jedoch ist im vorliegenden Fall sowohl das Stielteil 14 als auch das Kopfteil 16 mehreckig ausgebildet, insbesondere in Form eines Sechsecks. Das Funktionsteil 10 gemäß der Ausgestaltung nach der Fig. 5 kann; muss aber nicht laserdurchlässig ausgebildet sein. Vorzugsweise ist jedoch das Funktionsteil 10 gemäß der Darstellung nach der Fig. 5 mehrlagig ausgebildet und weist auf seiner Unterseite als Teil des Funktionsteils 10 eine weitere Lage 36 auf, die entlang den beiden Längsrändern 38 der ersten Lage in Längsrichtung gesehen seitlich mit einem vorgebbaren Überstand das erste Funktionsteil 35 mit seinen vorstehenden Funktionselementen 14, 16 überragt. Zumindest im Bereich des Überstandes ist die weitere Lage 36 laserdurchlässig ausgebildet; es kann aber auch die gesamte weitere Lage 36 laserdurchlässig ausgebildet sein.

Auf der Unterseite von erster 35 und zweiter Funktionslage 36 befindet sich eine dritte Funktionslage 42, die aus einem Klebstoff, insbesondere in Form eines Polyurethan-Schmelzklebstoffs, gebildet ist. Der dahingehende Polyurethan-Schmelzklebstoff weist dabei bevorzugt die folgende Rezeptur auf:
- 10 - 90 % Polyester-Polyol,
- 0 bis 50 % Polyether-Polyol,
- 5 bis 35 % Polysiocyanat,
- 2 bis 50 % Flammschutzmittel wie antimon- und halogenfreie Phosphor- und/oder Triazinverbindungen, und
- bedarfsweise Zusatzstoffe, wie Katalysatoren und Stabilisatoren.

Dergestalt ist ein lösungsmittelfreier, feuchtigkeitsvernetzender Schmelzklebstoff auf der Basis von reaktiven Polyurethan-Tripolymeren realisiert. Der dahingehende Schmelzklebstoff als weitere dritte Funktionslage 42 ist sofort reaktiv und kann mit einem Drittbauteil 20 unmittelbar in klebender fester Verbindungsweise durch Aufsetzen verbunden werden. Ist das Drittbauteil 20 im Bereich des Überstandes 40 der weiteren zweiten Lage 36 als Schwarzkörper ausgebildet, lässt sich dergestalt über den laserdurchlässigen Überstand 40 mittels Laserlicht der in Fig. 5 gezeigte Gesamtverbund sicher festlegen. Aufgrund der dann hergestellten Laserverbindung und der Klebstoffverbindung ist ein redundantes Gesamtsystem geschaffen, so dass beim Versagen einer Verbindungstechnik die andere Verbindungstechnik noch die sichere Verbindung gewährleistet.

Will man kein redundantes System, kann man die Klebstoffschicht 42 auch weglassen und über die laserdurchlässigen Überstände 40 der zweiten Funktionslage 36 die Verbindung mit dem Drittbauteil 20 über eine entsprechend vorzusehende Sperrlage 18 für Laserlicht vornehmen. Es ist selbstredend, dass in Blickrichtung auf die Fig. 5 gesehen die Klebstoffschicht 42 nach unten hin von einem Abdeckpapier (nicht dargestellt) abgedeckt sein kann, nach dessen Entfernen die wirksame Klebstoffschicht dann freigelegt die Verbindung mit dem Drittbauteil 20 eingeht.

Die erfindungsgemäße Lösung ist besonders dort gut einsetzbar, bei denen das jeweilige Drittbauteil 20 ein Spritzgussteil ist und beispielsweise aus Polyphenylsulfit (PPS) aufgebaut ist. Für die in Fig. 5 dargestellte, weitere zweite Lage 36 werden schwerentflammbare Kunststoffe eingesetzt, die beispielsweise Verbindungen aus Polykarbonat (PC) mit AcrylnitrilButadien-Styrol (ABS) darstellen. Insgesamt ist mit den angesprochenen Werkstoffen ein schwerentflammbares Gesamtbefestigungssystem geschaffen, das insbesondere seine Anwendung im Bereich der Flugzeugtechnik und der Passagier-Beförderung nahelegt. Anstelle der Wirkstoffrezeptur für den Klebstoff als dritte Funktionslage 42 kann auch alternativ ein schwerentflammbarer Acrylat-Kleber zum Einsatz kommen.

## Patentansprüche

1. Verfahren zum Verbinden eines ein- oder mehrlagigen Funktionsteils (10) mit einem Drittbauteil (20), wobei das Funktionsteil (10) auf zumindest einer Seite vorstehende Funktionselemente (14, 16) aufweist, wobei eine Trägereinrichtung (12) mit Verschluss- oder Adhäsionsteilen als Funktionselemente als eine Lage (35) des Funktionsteils (10) ausgebildet wird, **dadurch gekennzeichnet, dass** das Funktionsteil (10) zumindest teilweise aus einem zumindest teilweise Laserlicht durchlässigen Material gebildet wird, und dass eine zumindest teilweise laserundurchlässige Sperrlage (18) derart angeordnet wird, dass nach Durchtritt des Laserlichts durch das Funktionsteil (10) das Laserlicht innerhalb der Sperrlage (18) durch Absorption Wärme erzeugt, die geeignet ist, das Funktions-(10) und/oder das Drittbauteil (20) anzuschmelzen, um dergestalt diese miteinander zu verbinden.

2. Verfahren nach Anspruch 1, **dadurch gekennzeichnet, dass** das Funktionsteil (10) auf seiner dem Laserlichteintritt abgewandten Seite mit der Sperrlage (18) versehen wird und/oder dass die Sperrlage (18) aus dem Drittbauteil (20) selbst oder Teilen dieses Bauteils (20) und/oder aus einem eigenständigen Bauteil gebildet wird.

3. Verfahren nach Anspruch 1 oder 2, **dadurch gekennzeichnet, dass** die Trägereinrichtung (12) des Funktionsteils (10) von einer weiteren Lage (36) des Funktionsteils (10) seitlich mit einem vorgebbaren Überstand zumindest teilweise überragt wird, die zumindest teilweise aus einem laserdurchlässigen Material gebildet wird, nach deren Passieren das Laserlicht auf die Sperrlage (18) trifft oder zu dieser geleitet wird.

4. Verfahren nach einem der vorstehenden Ansprüche, **dadurch gekennzeichnet, dass** neben der Laserverbindung als zusätzliche Sicherung gegen ein ungewolltes Lösen zwischen Funktionsteil (10) und dem Drittbauteil (20) eine zweite Verbindungstechnik (42) zum Einsatz kommt.

5. Verfahren nach einem der vorstehenden Ansprüche, **dadurch gekennzeichnet, dass** als zweite Verbindungstechnik das Anbringen einer Klebstoffverbindung (42) zum Einsatz kommt.

6. Funktionsteil, insbesondere vorgesehen für einen Einsatz bei einem Verbindungsverfahren nach einem der vorstehenden Ansprüche, wobei auf zumindest einer Seite einer Trägereinrichtung (12) vorstehende Funktionselemente vorhanden sind, wobei die Trägereinrichtung (12) mit Verschluss- oder Adhäsionsteilen als Funktionselemente als eine Lage (35) des Funktionsteils (10) ausgebildet wird, **dadurch gekennzeichnet, dass** das Funktionsteil (10) zumindest teilweise aus laserlichtdurchlässigem Material gebildet ist und dass das Funktionsteil (10) auf seiner dem Laserlicht abgewandten Seite eine zumindest teilweise laserlichtundurchlässige Sperrlage (18) aufweist.

7. Funktionsteil nach Anspruch 6, **dadurch gekennzeichnet, dass** die Sperrlage (18) einstückiger Bestandteil der Trägereinrichtung (12) ist und/oder intrinsisch in dieser eingelagert ist und/oder als eigene Lage auf der der Funktionselemente der Trägereinrichtung (12) abgewandten Seite angeordnet ist.

8. Funktionsteil nach Anspruch 6 oder 7, **dadurch gekennzeichnet, dass** es mehrlagig ausgebildet ist, dass eine Lage (35) durch die Trägereinrichtung (12) mit den Funktionselementen gebildet ist und die weitere andere Lage (36) die erste Lage (35) mit einem seitlichen Überstand zumindest teilweise überragt, und dass die weitere Lage (36) zumindest im Bereich des Überstandes zumindest teilweise aus laserdurchlässigem Material gebildet ist.

9. Schwerentflammbares Gesamtsystem, unter Einsatz eines Verbindungsverfahrens nach einem der Ansprüche 1 bis 5 und eines Funktionsteils nach einem der Ansprüche 6 bis 8, **dadurch gekennzeichnet**, die Trägereinrichtung (12) des Funktionsteils (10) von einer weiteren Lage (36), die zumindest teilweise laserdurchlässig ist, überragt ist, dass an den überragten Stellen zumindest teilweise mittels Laserlichtabsorption die Verbindung mit einem Drittbauteil (20) hergestellt ist und dass als zusätzliche Sicherung zwischen Funktionsteil (10) und Drittbauteil (20) eine Klebstoffverbindung (42) vorgesehen ist.

10. Gesamtsystem nach Anspruch 9, **dadurch gekennzeichnet, dass** die Klebstoffverbindung (42) an den Stellen zwischen Funktionsteil (10) und Drittbauteil (20) vorgesehen ist, die von der Laserlichtverbindung ausgenommen sind.

11. Gesamtsystem nach Anspruch 9 oder 10, **dadurch gekennzeichnet, dass** das Drittbauteil (20) Bestandteil eines mit einem Bezug- und/oder Polstermaterial zu versehenden Fluggastsitzes ist und dass das Funktionsteil (10) zumindest teilweise aus einem Haftverschlussteil gebildet ist, das mit einem korrespondierend ausgebildeten Haftverschlussteil am Bezug- und/oder Polstermaterial einen immer wieder zu öffnenden Haftverschluss ausbildet.

## Claims

1. A method for connecting a single- or multi-layer functional part (10) to a third-party component (20), wherein the functional part (10) has functional elements (14, 16) protruding on at least one side, wherein a substrate element (12) is designed with closure or adhesion parts as functional elements as a layer (35) of the functional element (10), **characterised in that** the functional part (10) is formed at least partially from a material which is at least partially transparent to laser light, and **in that** a barrier layer (18) is arranged at least partially opaque to laser light such that, after passage of the laser light through the functional part (10), the laser light inside the barrier layer (18) generates heat by absorption, which is suitable for melting the functional part (10) and/or the third-party component (20) in order to connect them to each other in this way.

2. The method according to claim 1, **characterised in that** the functional part (10) at the side facing away from the laser light entrance side is provided with the barrier layer (18) and/or that the barrier layer (18) is formed by the third-party component (20) itself or parts of this component (20) and/or is formed by an independent component.

3. The method according to claim 1 or 2, **characterised in that** the substrate element (12) of the functional part (10) has a further layer (36) of the functional part (10) at least partially extending over it with a specifiable excess, which layer is formed at least partially by a laser-permeable material, and, after having passed through it, the laser light strikes the barrier layer (18) or is guided to it.

4. The method according to one of the preceding claims, **characterised in that**, in addition to the laser bond, a second bond system (42) is introduced between functional part (10) and the third-party component (20) as an additional safeguard against unintentional disengagement.

5. The method according to one of the preceding claims, **characterised in that** the attachment of an adhesive compound (42) is used as the second bond system.

6. A functional part, in particular provided for use in a connecting method according to one of the preceding claims, wherein, on at least one side of a substrate element (12), protruding functional elements are present, wherein the substrate element (12) is designed with closure or adhesion parts as functional elements as a layer (35) of the functional element, **characterised in that** the functional part (10) is formed at least partially by a laser-impermeable material and that the functional part (10), on its side facing away from the laser light, has a barrier layer (18) at least partially impermeable to laser-light.

7. The functional part according to claim 6, **characterised in that** the barrier layer (18) is an integral part of the substrate element (12) and/or is intrinsically incorporated into it and/or is arranged as a separate layer on the side facing away from the functional elements of the substrate element (12).

8. The functional part according to claim 6 or 7, **characterised in that** it is formed in multiple layers, that one layer (35) is formed by the substrate element (12) with the functional elements and the further other layer (36) at least partially laterally protrudes beyond the first layer (35), and that the further layer (36) is formed at least partially by a laser-permeable material, at least in the area of the projection.

9. A flame retardant total system, using a bond method according to one of claims 1 to 5 and a functional part according to one of claims 6 to 8, **characterised in that** a further layer (36) extends laterally, at least partially, over the substrate element (12) of the functional part (10), which layer is at least partially laser-permeable, that at the locations of extension, the bond to a third-party component (20) is produced at least partially by means of laser light absorption, and that as an additional safeguard between functional part (10) and the third-party component (20), an adhesive bond (42) is provided.

10. The total system according to claim 9, **characterised in that** the adhesive bond (42) is provided at the locations between functional part (10) and third-party component (20) which are excluded from the laser light bond.

11. The total system according to claim 9 or 10, **characterised in that** the third-party component (20) is part of an aircraft passenger seat to be provided with a cover and/or upholstery material and that the functional part (10) is formed at least partially of an adhesion closure part which, with a correspondingly shaped adhesion closure part on the cover and/or upholstery material, forms a repeatedly releasable adhesion closure part.

## Revendications

1. Procédé de liaison d'une pièce (10) fonctionnelle à une couche ou à plusieurs couches à une pièce (20) tierce, la pièce (10) fonctionnelle ayant des éléments (14, 16) fonctionnels en saillie au moins d'un côté, dans lequel on constitue un dispositif (12) de support à tige de fermeture ou d'adhérence, comme éléments fonctionnels, sous la forme d'une couche (35) de la pièce (10) fonctionnelle, **caractérisé en ce que** l'on forme la pièce (10) fonctionnelle, au moins en partie, en un matériau, perméable, au moins en partie, à de la lumière laser et **en ce que** l'on met une couche (18) d'arrêt imperméable, au moins en partie, à la lumière laser, de manière à ce que la lumière laser produise, après qu'elle a passé à travers la pièce (10) fonctionnelle, au sein de la couche (18) d'arrêt, par absorption, de la chaleur propre à faire fondre la pièce (10) fonctionnelle et/ou la pièce (20) tierce, afin de les relier l'une à l'autre.

2. Procédé suivant la revendication 1, **caractérisé en ce que** l'on met la couche (18) d'arrêt du côté de la pièce (10) fonctionnelle, loin de l'entrée de la lumière laser et/ou **en ce que** l'on forme la couche (18) d'arrêt à partir de la pièce (20) tierce soi-même ou de parties de cette pièce (20) et/ou d'une pièce indépendante.

3. Procédé suivant la revendication 1 ou 2, **caractérisé en ce que** l'on fait dépasser le dispositif (12) de support de la pièce (10) fonctionnelle d'une autre couche (36) de la pièce (10) fonctionnelle, au moins en partie latéralement d'un dépassement pouvant être donné à l'avance, que l'on forme, au moins en partie, après son passage, en un matériau perméable à la lumière laser, la lumière laser arrivant sur la couche (18) d'arrêt ou y étant envoyée.

4. Procédé suivant l'une des revendications précédentes, **caractérisé en ce que**, outre la liaison laser, on utilise une deuxième technique (42) de liaison, comme sécurité supplémentaire, à l'encontre d'un détachement intempestif entre la pièce (10) fonctionnelle et la pièce (20) tierce.

5. Procédé suivant l'une des revendications précédentes, **caractérisé en ce que** l'on utilise, comme deuxième technique de liaison, un collage (42).

6. Pièce fonctionnelle, prévue notamment pour être utilisée dans un procédé de liaison suivant l'une des revendications précédentes, dans laquelle il y a des éléments fonctionnels en saillie au moins d'un côté d'un dispositif (12) de support, le dispositif (12) de support étant formé de tiges de fermeture ou d'adhérence, comme éléments fonctionnels sous la forme d'une couche (35) de la pièce (10) fonctionnelle, **caractérisée en ce que** la pièce (10) fonctionnelle est, au moins en partie, en un matériau perméable à la lumière laser et **en ce que** la pièce (10) fonctionnelle a, du côté loin de la lumière laser, une couche (18) d'arrêt imperméable, au moins en partie, à la lumière laser.

7. Pièce fonctionnelle suivant la revendication 6, **caractérisée en ce que** la couche (18) d'arrêt est d'une seule pièce avec le dispositif (12) de support et/ou y est incorporée intrinsèquement et/ou est disposée sous la forme d'une propre couche du côté loin des éléments fonctionnels du dispositif (12) de support.

8. Pièce fonctionnelle suivant la revendication 6 ou 7, **caractérisée en ce qu'**elle est en plusieurs couches, **en ce qu'**une couche (35) est formée du dispositif (12) de support ayant les éléments fonctionnels et l'autre couche (36) dépasse, au moins en partie, de la première couche (35) par un dépassement latéral, et **en ce que** l'autre couche (36) est formée, au moins dans la région du dépassement, au moins en partie, d'un matériau perméable à la lumière laser.

9. Système global, inflammable difficilement, en utilisant un procédé suivant l'une des revendications 1 à 5 et une pièce fonctionnelle suivant l'une des revendications 6 à 8, **caractérisé en ce que** le dispositif (12) de support de la pièce (10) fonctionnelle dépasse d'une autre couche (36), qui est perméable, au moins en partie, à la lumière laser, **en ce qu'**au point de dépassement est réalisé, au moins en partie, au moyen d'une absorption de lumière laser, la liaison avec une pièce (20) tierce et **en ce que**, comme sécurité supplémentaire, il est prévu un collage (42) entre la pièce (10) fonctionnelle et la pièce (20) tierce.

10. Système global suivant la revendication 9, **caractérisé en ce que** le collage (42) est prévu aux endroits, entre la pièce (10) fonctionnelle et la pièce (20) tierce, qui sont exclus de la liaison par la lumière laser.

11. Système global suivant la revendication 9 ou 10, **caractérisé en ce que** la pièce (20) tierce est une partie constitutive d'un siège de passager d'avion à pouvoir d'un matériau de revêtement et/ou de rembourrage et **en ce que** la pièce (10) fonctionnelle est formée, au moins en partie d'une partie de fermeture autoagrippante, qui constitue, avec une partie de fermeture autoagrippante constituée de manière correspondante sur le matériau de revêtement et/ou de rembourrage, une fermeture autoagrippante se réouvrant toujours.
